# EUROPEAN PATENT SPECIFICATION

(11) **EP 2 300 925 B1**
(45) Date of publication and mention of the grant of the patent: **08.04.2015**
(21) Application number: 08795485.5
(22) Date of filing: 21.08.2008
(51) Int. Cl.: G06F 13/40, H04L 29/08, G06F 3/06

(54) **SYSTEM TO CONNECT A SERIAL SCSI ARRAY CONTROLLER TO A STORAGE AREA NETWORK**
SYSTEM ZUM VERBINDEN EINES SERIEN-SCSI-ARRAY-CONTROLLERS MIT EINEM SPEICHERNETZWERK
SYSTÈME DESTINÉ À CONNECTER UN CONTRÔLEUR DE MATRICE SCSI EN SÉRIE À UN RÉSEAU DE STOCKAGE (SAN)

(30) Priority: 15.07.2008 US 80762
(43) Date of publication of application: 30.03.2011
(73) Proprietor: NetApp, Inc., Sunnyvale, CA 94089 (US)
(72) Inventor: JIBBE, Mahmoud, Wichita Kansas 67230 (US); SENGUPTA, Dhishankar, Bangalore 560062 (IN)
(74) Representative: Davies, Simon Robert
(86) International application number: PCT/US2008/009944
(87) International publication number: WO 2010/008366

(56) References cited:
- US-A1- 2005 138 191
- US-A1- 2006 004 935
- US-A1- 2006 041 691
- US-A1- 2007 073 966
- US-A1- 2007 121 621
- US-B2- 7 269 674

## Description

### Field of the Invention

The present invention relates to storage arrays generally and, more particularly, to a method and/or apparatus for connecting a serial Small Computer System Interface (SCSI) array controller module to a storage area network.

### Background of the Invention

With enterprise storage requirements escalating and becoming more complex, factors such as larger capacity, density, security, scalability and accessibility are more critical than ever. Enterprise data centers must be online all of the time, simultaneously fulfill requests from numerous users, allow for constant growth and expansion and be maintained while in operation. Serial Attached SCSI (SAS) devices are more affordable than Fibre Channel (FC) and more robust and reliable than Serial Advanced Technology Attachment (SATA). SAS systems fulfil these requirements as well as provide the necessary performance and scalability to move data at gigabit speeds-speeds that meet or exceed current storage I/O performance found in ATA, SATA, SCSI or FC systems. The industry has also benefitted from the freedom to choose either Serial Attached SCSI or SATA drives or both, depending on storage applications, since both drive types can operate on the same backplane.

Conventional SAS array modules (such as a Model 1333/Keystone/E3600) cannot be connected to a Storage Area Network (SAN). While fibre channel array modules sometimes have SAN connectivity, SAS modules do not. The lack of capability in connecting a SAS array to a SAN (using either Fibre Channel or Internet Protocol (IP)) occurs because the SAS interface is a point to point connection (or a point to many points) via an expander, where the expander has the capability of being on a network.

Conventional SAS devices can span up to a maximum of 6 meters at 3 Gbps speed in full duplex mode. Because of the cable length constraint, SAS devices are mostly restricted to point-to-point connectivity. Most modern backend storage devices are SAS devices (i.e., SAS disk drives). The storage devices have been made part of the SAN through fibre channel controllers which act as the SAN interface to the SAS drives. The SAS initiators do not have any SAN interface. SAS to FC converters are not currently available in conventional systems.

US 2006/0004935 A1 discloses a system employing a multi-protocol bridge for format conversion of data frames. It would be desirable to implement a system to connect a serial SCSI array controller module to a storage area network.

### Summary of the Invention

The present invention concerns an apparatus comprising a first circuit, a second circuit and an expansion circuit and a method for converting signal formats. The first circuit is configured to present and receive one or more first data packets in a first format compatible with a first protocol of an initiator. The second circuit is configured to present and receive one or more second data packets in a second format compatible with a second protocol of a storage area network. The expansion circuit is configured to convert the first data packets from the first format to the second format such that the initiator is in communication with a storage device of a storage area network.

The objects, features and advantages of the present invention include providing a system to connect a variety of network protocols that may (i) provide a serial SCSI array controller module to a storage area network, (ii) connect one or more SAN devices to one or more SAS devices, (iii) connect one or more SAS devices over a fibre channel network, and/or (iv) provide a cost effective implementation.

The invention is defined according to the apparatus of claim 1 and the method of claim 11.

### Brief Description of the Drawings

These and other objects, features and advantages of the present invention will be apparent from the following detailed description and the appended claims and drawings in which:
FIG. 1 is a block diagram of an embodiment of the present invention;
FIG. 2 is a more detailed diagram of an embodiment of the present invention;
FIG. 3 is a more detailed diagram of the controller portion of an embodiment of the present invention;
FIG. 4 is a block diagram illustrating frame conversion between an STF device and a SAS device; and
FIG. 5 is a block diagram illustrating the frame conversion between an STF device and a FC device.

### Detailed Description of the Preferred Embodiments

An embodiment of the present invention may be used to connect a Serial Attached SCSI (SAS) array to a Storage Area Network (SAN). An embodiment of the present invention may be used to convert SAS protocol frames (e.g., information unit "Command, Data, XferRDY, and Response", and task management), handshake, and/or primitive to Fibre Channel (FC) commands. An embodiment of the present invention may be transparent to a user and/or may be implemented with little or no impact on system performance (e.g., bandwidth and/or throughput performance).

An embodiment of the present invention may be used to implement SAS devices in a SAN environment. With conventional approaches, SAS devices operate mostly in a point to point connectivity configuration with limited operating distances. An embodiment of the present invention may be used to ensure SAS devices become an integrated part of a SAN environment and/or take full advantage of the large distances often present in a FC infrastructure. The present invention is extended to SAS initiators. An embodiment of the present invention may be implemented as a device with SAS ports and FC ports, which may provide a SAN interface to all SAS devices.

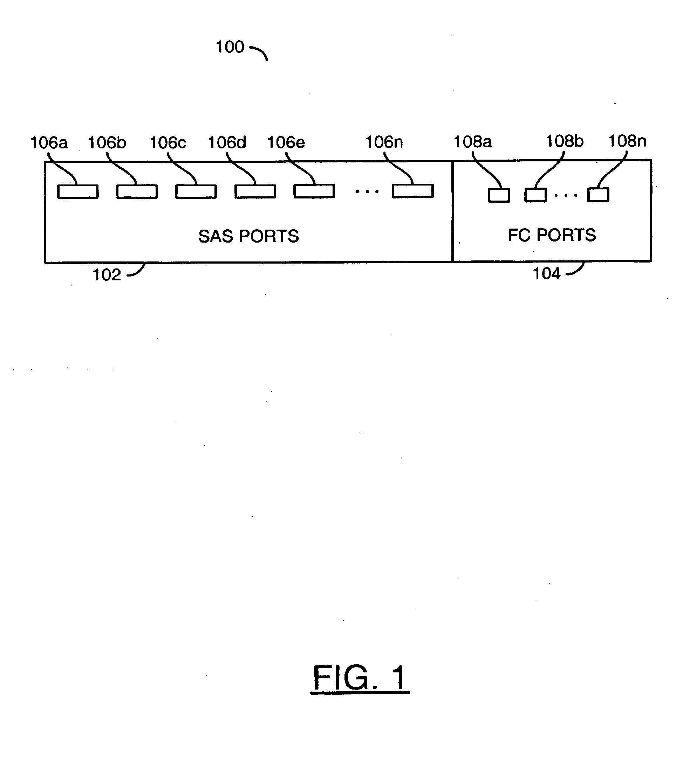

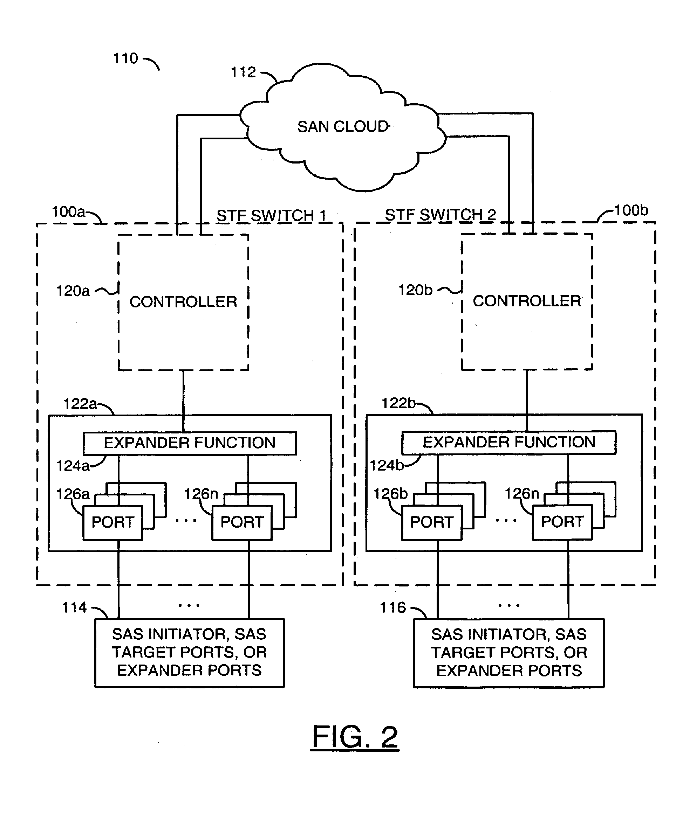

Referring to FIG. 1, a block diagram of a system 100 is shown in accordance with an embodiment of the present invention. The system 100 may be implemented as an "SAS to FC Switch" or an "STF switch". The system 100 generally comprises a block (or circuit) 102 and a block (or circuit) 104. The circuit 102 may include a number of ports 106a-106n. The circuit 104 may include a number of ports 108a-108n. The particular number of ports 106a-106n and 108a-108n on the system 100 may depend on the particular type of expander and IO chip implemented (to be described in more detail in connection with FIG. 2). In one example, the ports may receive one or more data packets in a format compatible with a SAS format. In one example, the ports 108a-108n may present and receive one or more second data packets in a format compatible with a fibre channel format. The system 100 converts between the SAS format and the fibre channel format.

Referring to FIG. 2, a block diagram of a system 110 is shown. The system 110 illustrates the internal components of a switch 100a and a switch 100b. The circuit 100a generally comprises a block (or circuit) 120a, a block (or circuit) 122a. The circuit 120a may be implemented as a controller circuit. The circuit 122a may be implemented as an expander circuit. The circuit 122a generally comprises a block (or circuit) 124a and a number of blocks (or circuits) 126a-126n. The circuit 124a may provide expander logic. The circuits 126a-126n may be implemented as a number of port circuits.

The expander logic circuit 124a can accommodate one or more SAS initiators along with the target SAS devices. The expander logic circuit 124a may be implemented as an IOC chip. The circuit 124a is configured to handle SAS initiator traffic when one or more SAS Host Bus Adapters (HBAs) are directly connected to the expander. The switch 100a is used to encapsulate SAS frames (or data packets) into one or more FC frames (or packets) so that the encapsulated frames can be transmitted through the SAN. The switch 100a may thus be used to implement SAS initiators as part of a SAN.

The system 110 also comprises a block (or circuit) 112, a block (or circuit) 114 and a block (or circuit) 116. The block 112 may represent a SAN cloud. The block 114 may be implemented as an SAS initiator, an SAS target port, or one more expander ports. The circuit 116 may also be implemented as an SAS initiator, an SAS target port, or one or more expanded ports.

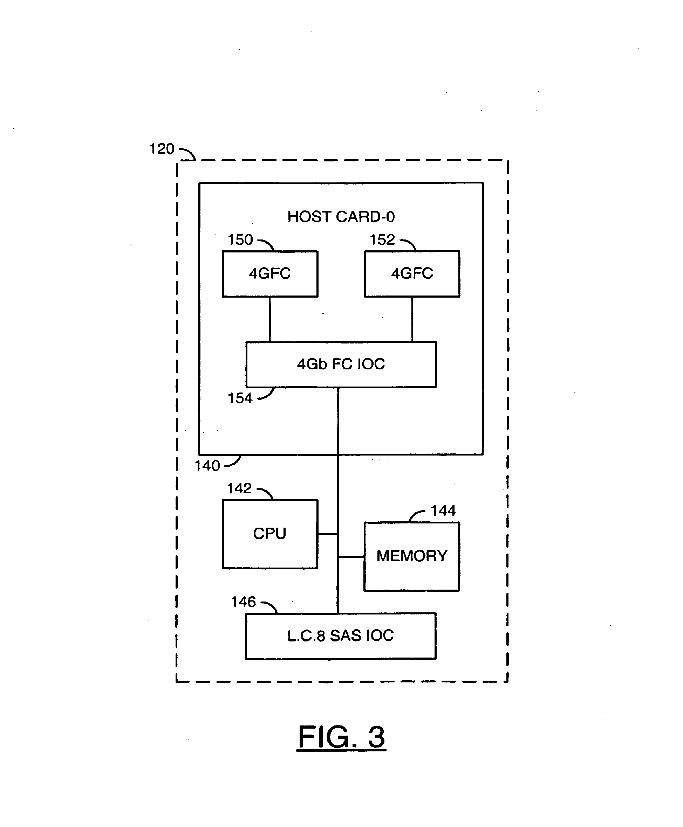

Referring to FIG. 3, a more detailed diagram of the controller 120 is shown. The controller 120 generally comprises a block (or circuit) 140, a block (or circuit) 142, a block (or circuit) 144 and a block (or circuit) 146. The circuit 140 may be implemented as a host card. The circuit 142 may be implemented as a central processing unit (CPU). The circuit 144 may be implemented as a memory. The circuit 146 may be implemented as a number of SAS I/O circuits. In one example, the circuit 146 may include a SAS I/O circuit. The circuit 140 generally comprises a block (or circuit) 150, a block (or circuit) 152 and a block (or circuit) 154. The circuit 150 may be implemented as a fibre channel input circuit. The circuit 152 may also be implemented as a fibre channel input circuit. In one example, the circuit 150 and the circuit 152 may be implemented as four gigabit fibre channel input circuits. The circuit 154 may be implemented as a fibre channel input/output circuit. In one example, the circuit 154 may be implemented as a four gigabit input/output circuit. The controller 110 may be implemented as a logic device where an FC frame gets converted to SAS data at the SAS IOC chip level. Such a frame may be forwarded to the expander function circuit 124a which then routes the frame to the appropriate SAS disks/targets.

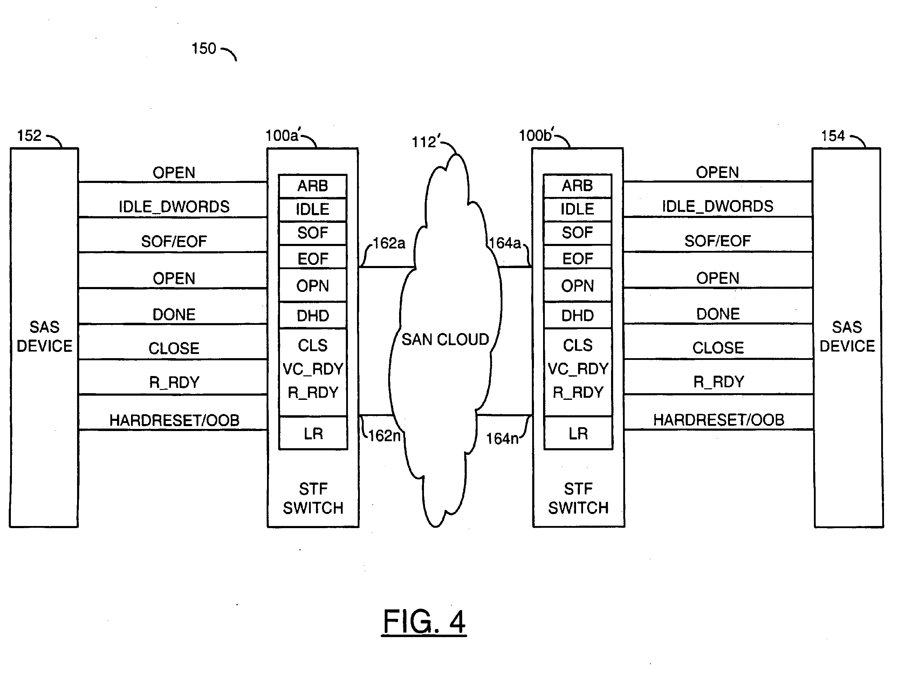

Referring to FIG. 4, a block diagram of a system 150 is shown. The system 150 illustrates primitive and frame conversion between an SAS device 152, an STF device 100a', a SAN cloud 112', an STF device 100b', and an SAS device 154. The device 152 may have a logical connection to the switch 100a' . The connection between the device 152 and the switch 100a' may be a serial connection, a parallel connection, or other type of sequenced connection. A number of signals (e.g., OPEN, IDLE_DWORDS, SOS/EOF, OPEN, DONE, CLOSE, R_RDY, and HARDREST/OOB) may be transfer between the device 152 and the device 100a' . The device 154 may have a logical connection to the switch 100b'. The connection between the device 154 and the switch 100b' may be a serial connection, a parallel connection, or other type of sequenced connection. A number of signals (e.g., OPEN, IDLE_DWORDS, SOS/EOF, OPEN, DONE, CLOSE, R_RDY, and HARDREST/OOB) may be transfer between the device 154 and the device 100b'.

The switch 100a' may have a number of inputs/outputs 162a-162n that may connect to the SAN cloud 112'. The switch 100b' may have a number of inputs/outputs 164a-164n that may connect to the SAN cloud 112'. In one example, the number of ports in the switch 100a' and/or the switch 100b' may be 4 ports. For example, if the switch 100a' has a dual port HBA switch installed, the 2 ports may be present. If two HBA cards are installed, then 4 ports may be present. The particular number of ports implemented may be varied to meet the design criterial of a particular implementation.

The conversions from SAS to FC (and vice-versa) may take place between the expander function circuit 124a and the SAS IOC chip. The system 150 illustrates conversion from the SAS device 152 into the STF switch 100a', then to the SAN cloud 112', then to the STF switch 100b' , and then to the SAS device 154. A number of signals are shown inside the switch 100a' and the switch 100b' that represent fibre channel and SAS primitives. For example, the signal ARB may represent an SAS primitive. In particular, the signal ARB may represent an arbitrate signal (e.g., with parameters 94F0F0 to represent fairness, 94FFFF to fill a word and/or 94yyy to request arbitration for AL_PA=YY). The signal ARB is one example of the format of a FC primitive. The other signals shown (e.g., IDLE, SOF, etc.) may represent similar primitives. For example, the signal DHD may represent a dynamic half-duplex, the signal R_RDY may represent a receiver ready signal, the signal LR may represent a link reset, etc.

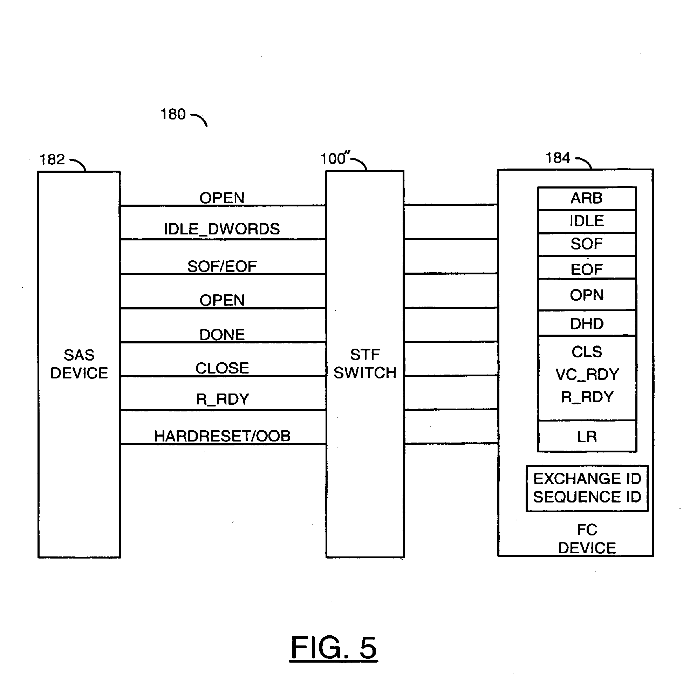

Referring to FIG. 5 a block diagram of a system 180 is shown. The system 180 illustrates primitive and frame conversion between an SAS device 182, a STF switch 100'', and a FC device 184. A number of signals (e.g., OPEN, IDLE_DWORDS, SOS/EOF, OPEN, DONE, CLOSE, R_RDY, and HARDREST/OOB) may be transmitted between the device 182 and the switch 100''. The device 184 may have a logical connection to the switch 100".

The STF switch 100'' may be used to allow SAS devices (e.g., 182) to talk with FC devices (e.g., 184). The STF switch 100'' may be used to generate/strip certain primitives/commands that the SAS device 182 does not support. The FC device 184 generally communicates with the SAS device 182 through a node port on the fabric side. Support for loop devices to participate in such a scenario may be added as a separate module. Also the "No Operational State" and the "Offline State" may be ignored, since the device is not present in such a case.

In one example, the FC payload sizes may need to be limited to 1024 bytes in the example where the SAS does not support 2K data size. In general, FC devices with Fibre Channel Class 1 and Class 2 compatibility may be implemented in such a configuration.

The Exchange ID and sequence ID may be implemented by (i) ensuring all frames are sent in order [IOD] (e.g., Out of Order delivery may not be supported in a general implementation), (ii) in cases where an FC device is trying to communicate with a SAS device, stripping the Exchange ID and the sequence ID at the STF switch level and forward the stripped packet to the SAS device (e.g., either after buffering the entire data or on a part by part basis), and (iii) in cases where a SAS device is trying to communicate with an FC device, generating the Exchange ID at the STF switch level. The Exchange ID may be 1 and all the sequences mapped to such an ID may be based on a sequence count mapped to a data offset field.

The switch 100 may allow SAS devices to be a part of the SAN. An embodiment of the present invention may provide SAN interfaces to both SAS Initiator/Target devices. The distance limitation for SAS devices may be eliminated by implementing a FC sub-system delivery module. The switch 100 may be implemented to avoid affecting the overall speed of operation by planning the number of SAS to FC ports implemented on the STF switch 100.

In one example, the switch 100 may implement an interface between one or more SAN devices and one or more SAS devices. In one example, one or more SAS device may communicate with one or more FC devices, and vice versa. In one example, one or more SAS devices may talk over a fibre channel network. In another example, one or more iSCSI devices may be connected to a FC network by adding a layer in the switch 100. For example, an Ethernet Network may be connected to a SAN network.

While the invention has been particularly shown and described with reference to the preferred embodiments thereof, it will be understood by those skilled in the art that various changes in form and details may be made without departing from the scope of the invention.

## Claims

1. An apparatus comprising:
a first circuit (182) configured to present and receive one or more first data packets in a first format compatible with a first protocol of an initiator (114, 116);
a second circuit (184) configured to present and receive one or more second data packets in a second format compatible with a second protocol of a storage area network (112); and
an expansion circuit (100, 124) configured to convert said first data packets from said first format to said second format such that said initiator is in communication with a storage device in said storage area network,
**characterised in that**
said first format comprises a serial attached small computer system interface (SAS) format,
said second format comprising a fibre channel (FC) format, and
said data packets are converted by being encapsulated in fibre channel frames.

2. The apparatus according to claim 1, wherein said initiator comprises an SAS initiator.

3. The apparatus according to claim 1, wherein said first circuit, said second circuit, and said expansion circuit are implemented in a single network device.

4. The apparatus according to claim 1, wherein said expansion circuit is further configured to convert second data packets from said second format to said first format.

5. The apparatus according to claim 1, wherein said apparatus is configured to operate as an interface between a SAS device and said storage area network.

6. The apparatus according to claim 1, wherein said expansion circuit converts SAS primitives.

7. The apparatus according to claim 1, wherein said expansion circuit is directly connected to a plurality of said first circuits.

8. A method for converting signals comprising the steps of:
(A) presenting and receiving using a first circuit one or more first data packets in a first format compatible with a first protocol of an initiator circuit;
(B) presenting and receiving using a second circuit one or more second data packets in a second format compatible with a second protocol of a storage area network; and
(C) converting said first data packets from said first format to said second format using an expansion circuit such that said initiator is in communication with a storage device in said storage area network,
**characterised in that**
said first format comprises a serial attached small computer system interface (SAS) format,
said second format comprising a fibre channel (FC) format, and
said data packets are converted by being encapsulated in fibre channel frames.

9. The method according to claim 8, wherein said initiator comprises an SAS initiator.

10. The method according to claim 8, further comprising the step of:
converting second data packets from said second format to said first format.

11. The method according to claim 8, wherein said first circuit, said second circuit, and said expansion circuit are implemented in a single network device.

## Patentansprüche

1. Vorrichtung, umfassend:
eine erste Schaltung (182), ausgelegt zum Präsentieren und Empfangen eines oder mehrerer erster Datenpakete in einem ersten Format, das mit einem ersten Protokoll eines Initiators (114, 116) kompatibel ist;
eine zweite Schaltung (184), ausgelegt zum Präsentieren und Empfangen eines oder mehrerer zweiter Datenpakete in einem zweiten Format, das mit einem zweiten Protokoll eines Speichernetzwerks (112) kompatibel ist; und
eine Erweiterungsschaltung (100, 124), ausgelegt zum Umsetzen der ersten Datenpakete aus dem ersten Format in das zweite Format, dergestalt, dass sich der Initiator in Kommunikation mit einer Speichereinrichtung in dem Speichernetzwerk befindet,
**dadurch gekennzeichnet, dass**
das erste Format ein SAS-Format (Serial Attached Small Computer System Interface) umfasst,
das zweite Format ein FC-Format (Faserkanal) umfasst und
die Datenpakete umgesetzt werden, indem sie in Faserkanalrahmen eingekapselt werden.

2. Vorrichtung nach Anspruch 1, wobei der Initiator einen SAS-Initiator umfasst.

3. Vorrichtung nach Anspruch 1, wobei die erste Schaltung, die zweite Schaltung und die Erweiterungsschaltung in einer einzigen Netzwerkeinrichtung implementiert sind.

4. Vorrichtung nach Anspruch 1, wobei die Erweiterungsschaltung ferner ausgelegt ist zum Umsetzen von zweiten Datenpaketen aus dem zweiten Format in das erste Format.

5. Vorrichtung nach Anspruch 1, wobei die Vorrichtung ausgelegt ist zum Betrieb als Schnittstelle zwischen einer SAS-Einrichtung und dem Speichernetzwerk.

6. Vorrichtung nach Anspruch 1, wobei die Erweiterungsschaltung SAS-Primitiven umsetzt.

7. Vorrichtung nach Anspruch 1, wobei die Erweiterungsschaltung direkt mit mehreren der ersten Schaltungen verbunden ist.

8. Verfahren zum Umsetzen von Signalen, mit den folgenden Schritten:
(a) Präsentieren und Empfangen eines oder mehrerer erster Datenpakete in einem ersten Format, das mit einem ersten Protokoll eines Initiators kompatibel ist, unter Verwendung einer ersten Schaltung;
(b) Präsentieren und Empfangen eines oder mehrerer zweiter Datenpakete in einem zweiten Format, das mit einem zweiten Protokoll eines Speichernetzwerks kompatibel ist, unter Verwendung einer zweiten Schaltung; und
(c) Umsetzen der ersten Datenpakete aus dem ersten Format in das zweite Format unter Verwendung einer Erweiterungsschaltung, dergestalt, dass sich der Initiator in Kommunikation mit einer Speichereinrichtung in dem Speichernetzwerk befindet,
**dadurch gekennzeichnet, dass**
das erste Format ein SAS-Format (Serial Attached Small Computer System Interface) umfasst,
das zweite Format ein FC-Format (Faserkanal) umfasst und
die Datenpakete umgesetzt werden, indem sie in Faserkanalrahmen eingekapselt werden.

9. Verfahren nach Anspruch 8, wobei der Initiator einen SAS-Initiator umfasst.

10. Verfahren nach Anspruch 8, ferner mit dem folgenden Schritt:
Umsetzen von zweiten Datenpaketen aus dem zweiten Format in das erste Format.

11. Verfahren nach Anspruch 8, wobei die erste Schaltung, die zweite Schaltung und die Erweiterungsschaltung in einer einzigen Netzwerkeinrichtung implementiert sind.

## Revendications

1. Appareil, comprenant :
un premier circuit (182) configuré pour présenter et recevoir un ou plusieurs premiers paquets de données dans un premier format compatible avec un premier protocole d'un initiateur (114, 116) ;
un deuxième circuit (184) configuré pour présenter et recevoir un ou plusieurs deuxièmes paquets de données dans un deuxième format compatible avec un deuxième protocole d'un réseau de stockage (112) ; et
un circuit d'extension (100, 124) configuré pour convertir lesdits premiers paquets de données dudit premier format audit deuxième format de façon à mettre ledit initiateur en communication avec un dispositif de stockage dans ledit réseau de stockage,
**caractérisé en ce que**
ledit premier format comprend un format d'interface Serial Attached SCSI (SAS),
ledit deuxième format comprend un format de canal fibre (FC), et
lesdits paquets de données sont convertis par encapsulation dans des trames de canal fibre.

2. Appareil selon la revendication 1, dans lequel ledit initiateur comprend un initiateur SAS.

3. Appareil selon la revendication 1, dans lequel ledit premier circuit, ledit deuxième circuit et ledit circuit d'extension sont mis en oeuvre dans un seul dispositif de réseau.

4. Appareil selon la revendication 1, dans lequel ledit circuit d'extension est en outre configuré pour convertir des deuxièmes paquets de données dudit deuxième format audit premier format.

5. Appareil selon la revendication 1, lequel appareil est configuré pour servir d'interface entre un dispositif SAS et ledit réseau de stockage.

6. Appareil selon la revendication 1, dans lequel ledit circuit d'extension convertit des primitives SAS.

7. Appareil selon la revendication 1, dans lequel ledit circuit d'extension est directement connecté à une pluralité desdits premiers circuits.

8. Procédé pour convertir des signaux, comprenant les étapes consistant à :
(A) présenter et recevoir, au moyen d'un premier circuit, un ou plusieurs premiers paquets de données dans un premier format compatible avec un premier protocole d'un initiateur ;
(B) présenter et recevoir, au moyen d'un deuxième circuit, un ou plusieurs deuxièmes paquets de données dans un deuxième format compatible avec un deuxième protocole d'un réseau de stockage ; et
(C) convertir lesdits premiers paquets de données dudit premier format audit deuxième format, au moyen d'un circuit d'extension, de façon à mettre ledit initiateur en communication avec un dispositif de stockage dans ledit réseau de stockage,
**caractérisé en ce que**
ledit premier format comprend un format d'interface Serial Attached SCSI (SAS),
ledit deuxième format comprend un format de canal fibre (FC), et
lesdits paquets de données sont convertis par encapsulation dans des trames de canal fibre.

9. Procédé selon la revendication 8, dans lequel ledit initiateur comprend un initiateur SAS.

10. Procédé selon la revendication 8, comprenant en outre l'étape consistant à :
convertir des deuxièmes paquets de données dudit deuxième format audit premier format.

11. Procédé selon la revendication 8, dans lequel ledit premier circuit, ledit deuxième circuit et ledit circuit d'extension sont mis en oeuvre dans un seul dispositif de réseau.
